# EUROPEAN PATENT APPLICATION

(11) **EP 1 382 431 A1**
(43) Date of publication of application: **21.01.2004**
(21) Application number: 03077213.1
(22) Date of filing: 14.07.2003
(51) Int. Cl.: B29C 51/26, B29C 70/54, F16B 5/06

(54) **Method for forming a plastic sheet and clamp therefor**

(30) Priority: 16.07.2002 NL 1021087
(71) Applicant: Stork Fokker AESP B.V., 3351 LB Papendrecht (NL)
(72) Inventor: van Ingen, Jaap Willem, 8216 BW Kampen (NL); Wielandt, Michael Laurence Sylvester, 2035 RC Haarlem (NL)
(74) Representative: van Westenbrugge, Andries

(57) **Abstract**

A method for forming a moulding from a flat sheet (1) of plastic material, comprising the following steps: mounting the sheet (1) in and/or on a frame (2) that extends along at least part of the edges (4) of the sheet (1), temporarily fixing the sheet (1) to the frame (2) by means of at least one clamp (3) that engages on the sheet (1), placing the sheet (1) with frame (2) in a press, heating the sheet (1), deforming the sheet (1) in the heated state by activating the press, making the clamp (3) move relative to the sheet (1) during pressing. Furthermore is the clamp used in the method also claimed.

## Description

The invention relates to a method for forming a shaped product from a plastic sheet. In a known manner the sheet, such as a laminate of fibre-reinforced thermoplastic materials, is fixed to a frame located at the edges of the sheet. The frame with the sheet to be formed fixed thereto is placed on a mould. The sheet is then heated such that it becomes deformable. Pressure is then exerted transversely on the sheet, such that it acquires the shape of the mould.

The pressure can, for example, be exerted by a rubber press that is flexible to such an extent that the sheet can be pressed into the mould by this means. According to another possibility, a mould of opposite shape is used that is the negative of the mould. Such a method is disclosed in JP-A 08207158.

In the method as described above the frame fulfils several functions. First of all, the frame serves as a support for the sheet to be formed, in particular in the heated state. Furthermore, the frame makes it easier to transport the sheet, in particular immediately before, and after, the forming process.

In practice it is found that fixing the sheet to the frame in the correct manner is not easy. Usually adhesive tape is used for this purpose, but this gives only a weak join. This presents problems especially in the case of larger and heavier sheets. Moreover, the adhesive tape must be able to withstand high temperatures, as a result of which it is very expensive, and it cannot be re-used.

The aim of the invention is, therefore, to provide a method as described above that provides a better method of fixing between the sheet and the frame. Said aim is achieved by means of a method for forming a moulding from a flat sheet of plastic material, comprising the following steps:
- mounting the sheet in and/or on a frame that extends along at least part of the edges of the sheet,
- temporarily fixing the sheet to the frame by means of at least one clamp that engages on the sheet,
- placing the sheet with frame in a press,
- heating the sheet,
- deforming the sheet in the heated state by activating the press,
- making the clamp move relative to the sheet during pressing.

The sheet can be fixed more firmly to the frame by means of clamping, as a result of which even the support of larger and heavier sheets is ensured. Furthermore, the clamps can be of relatively simple construction, for example of sheet material, and are suitable for re-use. The cost can therefore remain restricted. Moreover, the use of clamps yields further advantages. If, for example, the clamp is so constructed that it interacts with the sheet by means of friction, the clamp can be allowed to move relative to the sheet during pressing. As a result a certain tensile force is exerted on the sheet during forming. The advantage of this is that the shaped product acquires a smooth appearance. The clamp is preferably hooked in place with respect to the frame.

The invention furthermore relates, in combination, to a frame for use with the method as described above for forming a moulding from a sheet and a clamp for fixing a sheet to be formed to the frame. In particular, at least two clamps can be used for fixing a sheet to be formed to two opposing edges of the frame.

In addition, the invention relates to a clamp for use with the combination described above in connection with carrying out the method according to the invention. This clamp comprises two jaws, one jaw of which can engage on a sheet and the other jaw of which can engage on the frame. The jaw that can engage on the sheet preferably has a gripping surface that is shaped correspondingly to the part of the surface with which said jaw is in contact; the jaw that can engage on the sheet preferably interacts with the sheet by means of friction in such a way that when a specific sheer force is exceeded the sheet can move relative to the frame and/or the clamp.

The invention will be explained in more detail below with reference to the illustrative embodiments shown in the figures.

Figure 1 shows the combination according to the invention with a first clamp.

Figure 2 shows a second clamp.

Figures 3a and 3b show further alternatives for clamps.

Figures 4a and 4b show welded clamps.

A sheet 1, which, for example, consists of a laminate of fibre-reinforced thermoplastic materials, is shown in the figure. The thickness of the sheet can be, for example, between 1 and 2 mm, but other dimensions are also possible.

The sheet 1 is accommodated on a frame 2, which is shown diagrammatically and extends along the entire longitudinal edges 4 of the sheet.

The sheet 1 is clamped on the frame 2 by means of the clamps indicated in their entirety by 3. As shown in the figure, the longitudinal edges 4 located opposite one another are fixed in this way; in the case of a square sheet the other two longitudinal edges can be fixed to the frame 2 in a corresponding manner.

Each clamp 3 comprises two jaws 5, 6. The one jaw 5 engages on the edge 4 of the sheet 1; the other jaw 6 engages on the frame 2. The gripping surface 7 of the jaw 5 is shaped approximately correspondingly to the shape of the edge 4 of the sheet 1. The other jaw 6 has a hook shape 8, such that it is able to hook behind the frame 6.

With this embodiment of the jaws 5, 6 of the clamps 3, the sheet 1 can be subject to movements during the forming process. As a consequence of the deformation that the sheet 1 undergoes in the transverse direction, the clamps 3 and the frame 2 exert tensile forces on the sheet 1. As a consequence of the frictional interaction between the jaws 5 and the edges 4 of the sheet 1, movement will occur above a certain tensile force, which is advantageous in order to give the product formed from the sheet 1 a smooth surface.

Because the other jaw 6 has a hook shape 8, the clamp 3 can, per se, remain fixed to the frame 2.

The clamps 3 are particularly suitable for forming a product in a so-called rubber press. In such a rubber press the sheet 1 is pressed by means of an upper half of the press that has a rubber covering. This rubber covering moulds itself corresponding to the sheet and the other half of the press, which is known per se and therefore will not be described in more detail.

Prior to this moulding process, the assembly consisting of frame 2, sheet 1 and clamps 3 fitted thereon is heated in an oven to, for example, 350 °C, which temperature is dependant on the type of thermoplastic material of the sheet 1. The oven can be, for example, an infrared oven.

After heating, the assembly is fed in the heated state to the rubber press. During pressing, the frame 2 is pressed against the flat mould of the press, the clamps 3 being able to move away from the sheet 1, as described above.

The clamps are of such construction that they do not deform or hardly deform under the pressure of, for example, 100 bar that is customary for this purpose. This is possible because the clamps 3 consist of a sheet material, for example of aluminium.

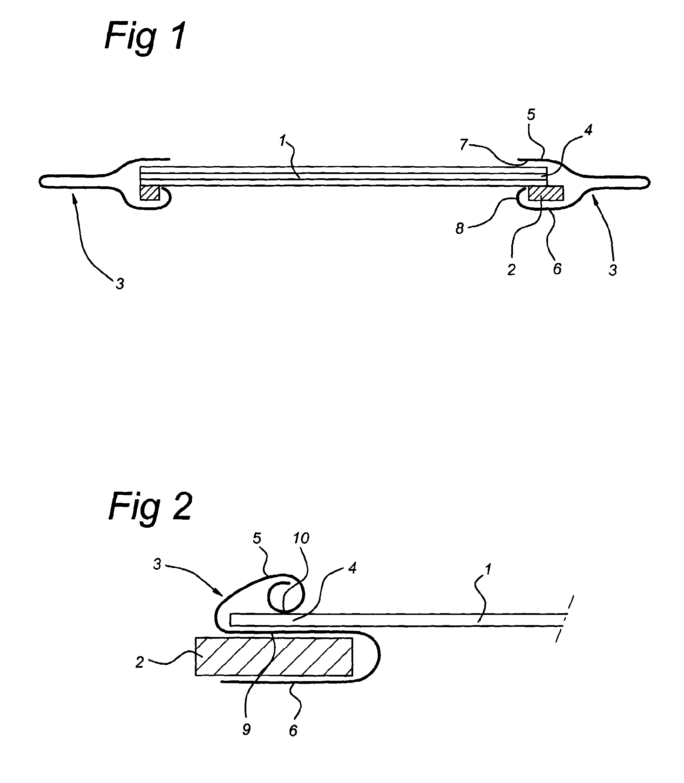

In the variant in Figure 2 the clamp 3 has an "S" shape that is produced because the jaws 5 and 6 are joined to one another via the intermediate piece 9. In the case of this clamp the jaw 6 and the intermediate piece 9 are pushed around the frame and the sheet 1 is pushed between the intermediate piece 9 and the jaw 5. The jaw 5 has a curl 10 by means of which clamping can be improved.

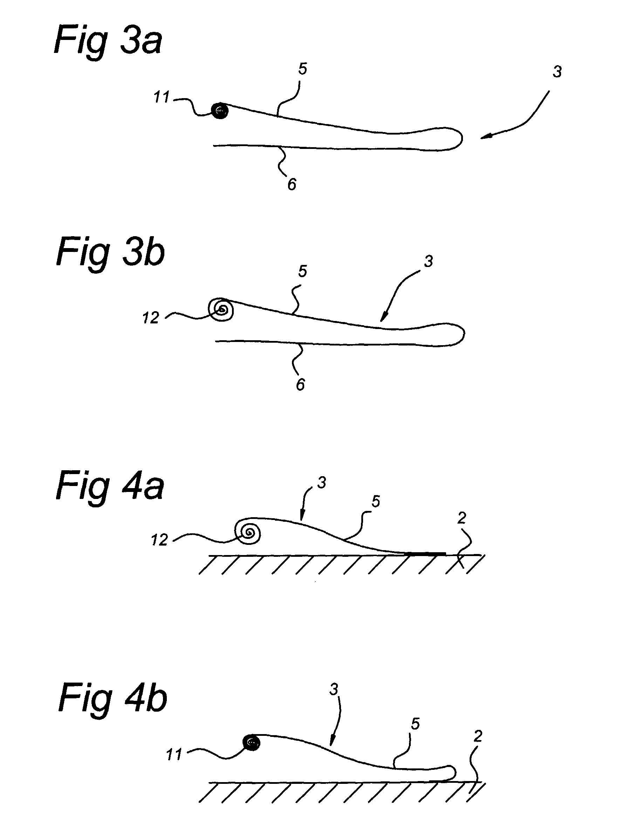

Figures 3a and 3b show two further alternative embodiments of clamps with jaws 5 and 6. The variant in Figure 3a has a leg 5 that merges into the solid end 11; in the variant in Figure 3b the leg 5 has a curled end. The variants in Figures 4a and 4b show clamps 3 with a single leg 5 that is welded to the frame 2. These legs 5 terminate in, respectively, a curl 12 and a solid part 11.

## Claims

1. Method for forming a moulding from a flat sheet (1) of plastic material, comprising the following steps:
- mounting the sheet (1) in and/or on a frame (2) that extends along at least part of the edges (4) of the sheet (1),
- temporarily fixing the sheet (1) to the frame (2) by means of at least one clamp (3) that engages on the sheet (1),
- placing the sheet (1) with frame (2) in a press,
- heating the sheet (1),
- deforming the sheet (1) in the heated state by activating the press,
- making the clamp (3) move relative to the sheet (1) during pressing.

2. Method according to Claim 1, wherein the clamp (3) interacts with the sheet (1) by means of friction.

3. Method according to Claim 1 or 2, wherein the clamp (3) is hooked in place on the frame (2).

4. Method according to one of the preceding claims, wherein the plastic material comprises a fibre-reinforced thermoplastic.

5. Method according to one of the preceding claims, wherein the clamp (3) is exposed to the same conditions, such as pressure and temperature, to which the flat sheet (1) is subjected.

6. Method according to one of the preceding claims, wherein, after forming a first moulding, the clamp (3) is also used for then forming a second moulding.

7. Method according to one of the preceding claims, wherein the thickness of the flat sheet (1) is between 0.1 and 1.0 mm.

8. In combination, a frame (2) for use with the method according to one of the preceding claims for forming a moulding from a sheet (1), as well as a clamp (3) for fixing a sheet (1) to be formed to a frame (2).

9. Combination according to Claim 8, comprising at least two clamps (3) for fixing a sheet (1) to be formed to two opposing edges of the frame (2).

10. Combination according to Claim 8 or 9, wherein at least one clamp (3) is welded to the frame (2).

11. Combination according to Claim 8, 9 or 10, wherein at least one clamp (3) is clamped on the frame (2).

12. Clamp (3) for use with the combination according to Claim 8, 9 or 10 in connection with carrying out the method according to one of Claims 1 - 7, comprising two jaws (5, 6), one jaw (5) of which can engage on a sheet (1) and the other jaw (6) of which can engage on the frame (2).

13. Clamp (3) according to Claim 12, wherein the jaw (5) that can engage on the sheet (1) has a gripping surface (7) that is shaped correspondingly to the part of the surface with which said jaw (5) is in contact.

14. Clamp (3) according to Claim 12 or 13, wherein the jaw (5) that can engage on the sheet (1) is able to interact with the sheet (1) by means of friction in such a way that when a specific sheer force is exceeded the sheet (1) can move relative to the frame (2) and/or the clamp (3).

15. Clamp (3) according to one of Claims 12 - 14, wherein the jaw (6) that can engage on the frame (2) is able to interact with the frame (2) by means of shapes that engage in one another.

16. Clamp (3) according to Claim 15, wherein the jaw (6) that can engage on the frame (2) has a hook shape (8), such that said jaw (6) can be hooked behind an edge or ridge of the frame (2).

17. Clamp (3) according to one of Claims 12 - 16, wherein the jaws (5, 6) are joined via an intermediate piece (9), so forming an "S" shape.

18. Clamp (3) according to one of Claims 12 - 17, comprising a sheet metal such as aluminium.

19. Clamp (3) according to one of Claims 12 - 19, wherein the clamp (3) is re-usable.

20. Clamp according to one of Claims 12 - 19, wherein the clamp consists of steel, such as stainless steel.
